Europäisches Patentamt

European Patent Office

Office européen des brevets

(11) Publication number: **0 165 659**
**B1**

(12) **EUROPEAN PATENT SPECIFICATION**

(45) Date of publication of patent specification: **20.06.90**

(21) Application number: **85302022.0**

(22) Date of filing: **22.03.85**

(51) Int. Cl.⁵: **E 02 B 3/12**

(54) **Flexible blanket.**

(30) Priority: **22.03.84 GB 8407514**

(43) Date of publication of application:
**27.12.85 Bulletin 85/52**

(45) Publication of the grant of the patent:
**20.06.90 Bulletin 90/25**

(84) Designated Contracting States:
**BE DE FR NL SE**

(56) References cited:
**EP-A-0 152 232**
**CA-A-1 129 218**
**GB-A-2 139 676**
**US-A-2 454 292**
**US-A-2 674 856**

(73) Proprietor: **DUNLOP LIMITED**
**Silvertown House Vincent Square**
**London SW1P 2PL (GB)**

(72) Inventor: **Waters, Charles Michael**
**Holly Cottage Church Lane**
**Wroxham Norfolk (GB)**

(74) Representative: **Badger, John Raymond et al**
**BTR GROUP PATENT & TRADE MARK SERVICE**
**P.O. Box 504**
**Erdington Birmingham B24 9QH (GB)**

Courier Press, Leamington Spa, England.

## Description

The present invention relates to flexible blankets, and more particularly to such blankets for protection or stabilisation of underwater structures and pipe lines, sea and river beds, embankments and other situations subject to instability and erosion.

It is common practice to lay pipe lines on the sea bed between for example oil production platforms and onshore processing facilities. However, as a result of strong currents the sea bed is a very unstable environment. Scouring can remove the sea bed from beneath any object which interrupts the flow of the currents and sand waves can erode the entire sea bed over a considerable area. Furthermore the temperature and viscosity of the product conveyed may induce regular movement and oscillation of the pipe line. Many methods of pipe line stabilisation have been employed with varying degrees of limited success.

Damage from trawl boards, anchors, debris and the like is another problem facing pipe lines. Further, anchor chains or construction lines may cut through protective concrete coatings and damage exposed pipes. A stabilisation system therefore which can additionally provide significant mechanical resistance has particular advantages.

It is known to provide pipe lines with a pre-cast reinforced concrete coating. This provides ballast and mechanical protection but renders the pipes more difficult to install and necessitates more sophisticated installation vessels as required coating thicknesses increase. In order to obtain sufficient ballast, the thickness of concrete may need to be quite considerable and in order to remain within practicable limits, supplementary ballast may still be needed. Such coatings do not address the problems of sea bed scour since their external contour, like that of a pipe, maximises turbulance and thereby underscour of the pipe line foundation.

It is also known to entrench pipe lines but this again does not overcome the problem of sand wave erosion which may cause the sea bed elevation to reduce by more than the limit of trenching depth capability.

Another method used in an attempt to overcome the problem of erosion is rock dumping. However, the prevent scavenging of sediment through the rock, a filter bed of graded particles needs to be built up as a preliminary. The particles of rock are not bound one to another and hence movement and sifting occurs in hydrodynamic surge. Erosion at the perimeters is progressive and unavoidable. Positioning of the rock is difficult to control and the potential of damage from the drop is considerable.

Another method tried is the provision of concrete saddles. However, this method, in common with other methods using rigid protection is only successful when the unit is laid on stable foundations. Such methods are completely unable to withstand or prevent erosion of foundations by sea bed scour.

A more flexible version of the concrete saddle is the provision of concrete grout bags. These are only flexible at a limited number of hinge points and are expensive to install.

Another known method is the provision of filled bitumen mattresses. There are in theory flexible but the theory is severely limited by the disadvantageous properties of the bitumen. In warm weather bitumen is comparatively fluid and the mattresses must be subject to considerable constraint in handling, transportation, storage and installation. However, in cold weather, bitumen becomes so hard that the mattresses are rigid and brittle. Temperatures at the sea bed are low and thus once installed, the mattresses lose their ductility and flex only very slowly. This slow flexing may be sufficient to accommodate gradual changes in the sea bed caused by erosion but is not sufficient to accommodate the degree of flexing caused if it is desired to move the mattress after installation to a new location on the pipe line or if the mattress is disturbed by anchors, trawl boards etc. Furthermore, bitumen becomes gradually more brittle with age and thus mattresses using bitumen have a limited period of practical benefit.

Different types of revetments mat have been proposed for protection of a surface against soil erosion. Two such mats are described in US Patent Specification Numbers 2,454,292 and 2,674,856. Each of the mats disclosed comprise a plurality of elongate rectangular concrete slabs cast about linking wires to be coupled to one another in two perpendicular directions. The edges of the slabs are bevelled to aid flexibility although in some of the blocks the flexibility is limited by their shape. The flexibility between adjacent blocks does not have to be great since only substantially even surfaces need to be protected. These blankets cannot provide a structure of mutually contiguous segments which can move in all directions to give the flexibility required to conform to a variety of underwater structures.

The object of the present invention is to provide a blanket which gives flexibility in all directions to conform to a variety of underwater structures which also protects the underlying structure.

According to a first aspect of the present invention, there is provided a flexible blanket for protection or stabilisation of underwater structures and pipe lines, unstable beds and embankments, the blanket comprising a plurality of segments arranged in one or more layers each one segment in height, each segment including a top and a bottom, and between the top and bottom a middle zone through which the central plane of the segment passes; and the segments in the or each layer being substantially contiguous at least at their middle zones, characterised in that each segment is in plan view, a hexagon; each segment tapers substantially regularly from a maximum hexagonal cross-section at its middle zone to a minimum hexagonal cross-section at one or both ends thereof; each segment is so joined to each adjacent segment in the region of their respective median zones that the segments are held substantially contiguously but are free to pivot relatively one to another insofar as is permitted by said taper; and, in that, in plan view each layer resembles a honeycomb where the segments are arranged in a series of parallel rows such that the centres of the segments in one row are off-set from the centres of the segments in an adjacent row so that there are no straight line joins between adjacent rows of segments.

Thus a flexible blanket is produced which is flexible in all directions due to the relative pivot between segments. Because the segments in a layer are contiguous at their middle zone the blanket forms a continuous protective surface. The honeycomb arrangement which provides no straight line joins helps to prevent sawing by anchor cables or construction lines.

The segments may taper from the middle zone to one end only, the other end being parallel-sided; or alternatively they may taper from the middle zone toward each end.

The segments may be joined one to another by rope means extending between adjacent segments.

The rope means preferably forms an interwoven network extending throughout the blanket and being embedded in the material of each segment.

The rope means are preferably plastics material, advantageously nylon or polyester.

The material of each segment may comprise an aggregate, a filler and a binder. The preferred aggregate may be stone, granite, magnetite or haemetite. The preferred fillers and binders are crushed limestone, cement and epoxy resin.

The segments may taper at an included angle in the region of 25° to 30°.

The blanket may comprise a variety of layers, some of which need not extend over the entire area of the blanket.

The blanket is preferably bendable about a 300 millimetre radius in any direction.

Embodiments of the present invention will now be more particularly described by way of example and with reference to the accompanying drawings, in which:

Figure 1 is a perspective view of a segment for use in a blanket embodying the invention;

Figure 2 is a perspective view of an alternative form of segment for use in a blanket embodying the invention.

Figure 3 is a schematic plan view of a blanket embodying the invention;

Figure 4 shows a multi-layer blanket embodying the invention is use;

Figure 5 shows another form of multi-layer blanket in use;

Figure 6 shows a continuous length of blanket in typical installation procedure; and

Figure 7 shows blankets laid contiguously in the form of surface paving.

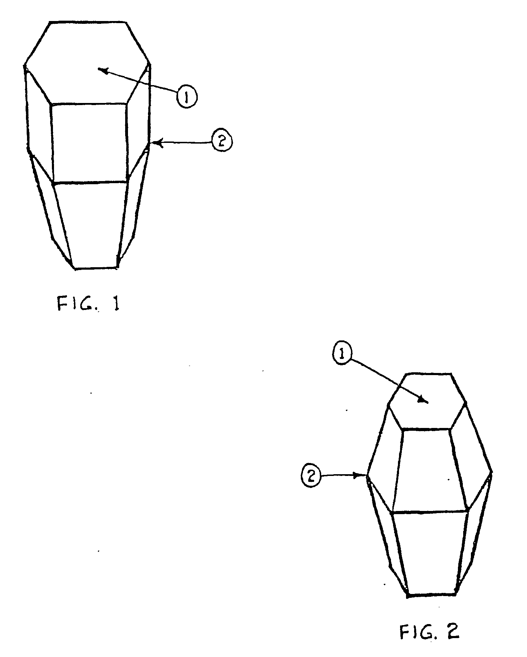

Referring now to the drawings, Figures 1 and 2 show alternative forms of segment 1 for use in a blanket embodying the invention. Each segment has a waist portion 2 where the segment is of maximum cross-sectional area. It is at this point that each segment touches the next adjacent segment in the blanket. The segment shown in Figure 1 is parallel-sided at one end and tapered at an angle between 25° and 30° toward the other end. This enables a blanket made of such segments to either sag-bend or over-bend depending on which way up the segments are used. The segment shown in Figure 2 tapers from the waist portion 2 toward each end to an equal degree. Such segments can be used to make a blanket which will both sag-bend and over-bend as is required.

The segments are ideally 100 mm side length at the waist, have a total height between 150 mm and 200 mm, a taper of 20 mm—25 mm and are adapted to bend around radii down to approximately 300 mm.

The segments are constructed from a settable compound comprising an aggregate, a filler and a binder. Materials which may be used are stone, granite, magnetite, haematite, sand, crushed limestone, cement and/or epoxy resin.

The blankets have a variety of functions. One is to act as a ballast to hold pipe lines or structures in place in which case their prime characteristic is a high density. In such cases, the heaviest possible filler, such as haematite, is used and the product density may be as high as 3.7 tonnes/m$^3$. Alternatively, the blanket may be provided to protect against anchor or construction line sawing in which case hardness is the prime characteristic required. In this case, a hard filler, such as granite is used, and the hardness may be as high as 7 on the Mohs scale. In some circumstances, both density and hardness may be required in which case a compromise is reached between the characteristics.

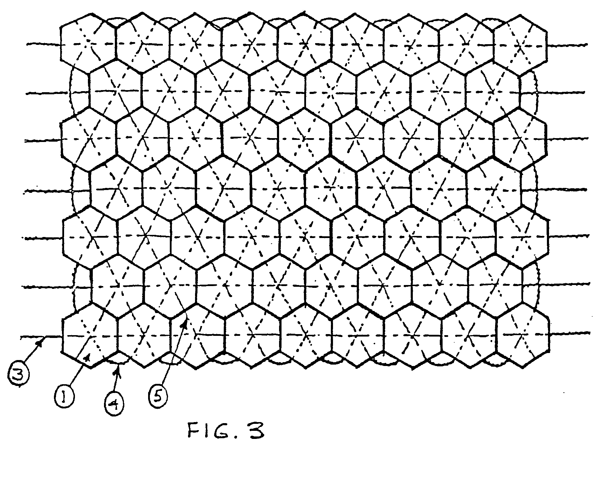

The segments are formed into a blanket as shown in Figure 3. They are arranged with their waist portions 2 touching and are held together by a network of ropes. Longitudinal lifting ropes 3 extend parallely through the blanket and are 10 mm to 20 mm thick three-strand nylon for individual blankets depending on length and up to 48 mm thick for continuous blanket lengths. The blanket may be lifted by means of these ropes either by both ends or by a single end. Each of these lifting ropes 3 extends through a line of segments. Each line of segments is connected to the next adjacent line by criss-crossing linking ropes 5. These linking ropes are generally 4 mm to 7 mm diameter three-strand nylon and extend diagonally through the blanket. At the edges of the blanket, they emerge from the segments in the form of loops 4.

Preferred individual blanket sizes are 2.5 m wide and up to 10 m long. This is a convenient size for lifting and transportation. However, for certain applications such as continuous pipe cover the blanket is produced in longer lengths and supplied on reels which can be attached to suitable vessels for installation as shown in Figure 6.

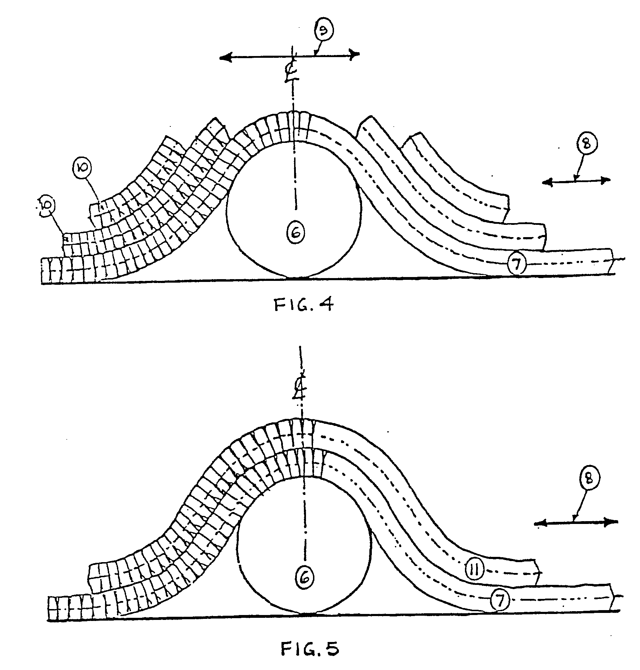

Figure 4 shows one method of using the blanket. Pipe line 6 is ballasted by a multi-layer blanket in which the layers are held together at the loops 4. The lowermost layer 7 is the primary layer by which the entire assembly can be lifted. The outermost part 8 of this primary layer forms a scour skirt to adapt to changes in condition of the sea bed which may be caused by the introduction of the pipe line and its effect on water currents. At the central part 9 of the blanket, there is again only the primary layer since bulk here may tend to facilitate snagging and dislodgement of individual blankets by anchors, trawl boards etc. Between the outermost part 8 and the central part 9 are a number of secondary layers 10 adapted to provide weight at the points where it will most advantageously hold the pipe line in position.

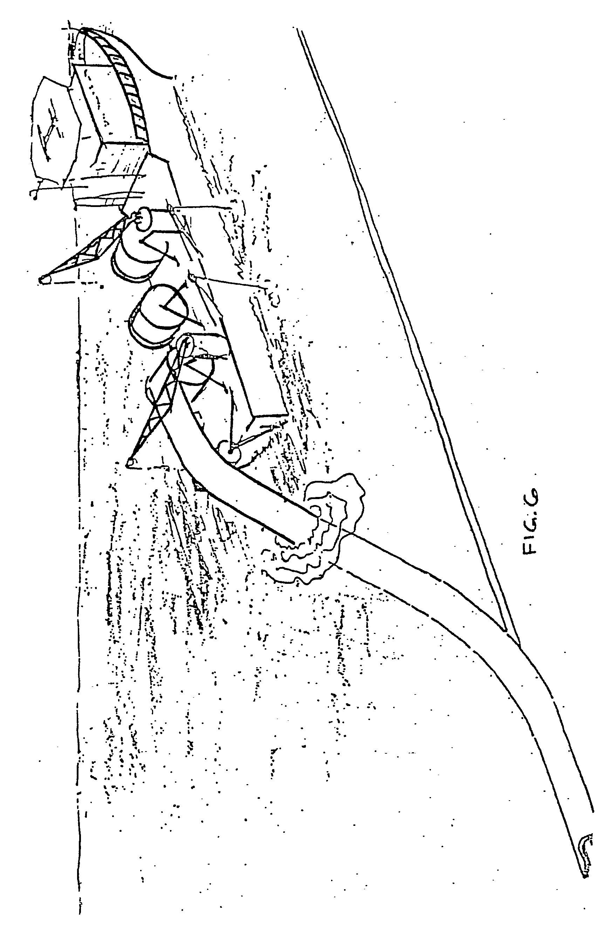

Figure 5 shows an alternative form in which two layers 7 and 11 are provided each of identical width but the upper layer being of reduced length. A shear membrane (not shown) is provided between the layers to enable relative movement between them and accommodate the over-bend and sag-bend differentials.

Figure 6 shows the installation of a continuous length of blanket which would be particularly advantageous where mechanical protection is paramount. In this format snagging contingency and dislodgement is virtually eliminated.

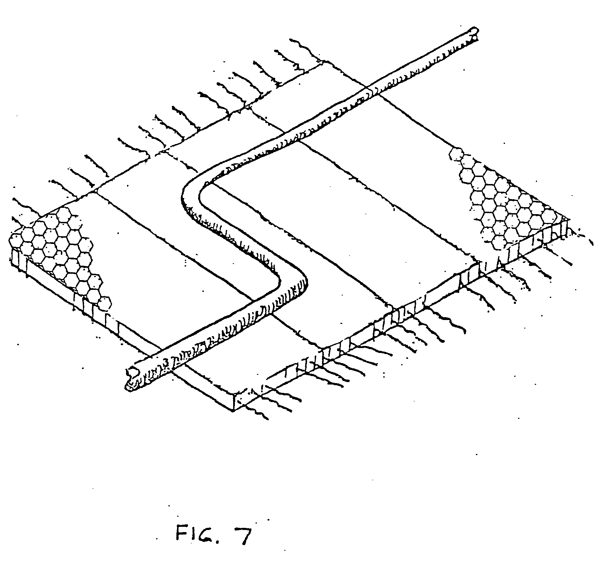

Figure 7 shows the blanket laid in contiguous paving on the sea bed enabling the perimeter to operate as a scour skirt to protect the elevation of the inner area for use as a constant elevation slip-pad under, for example a pipe line expansion loop or as a protected foundation raft for superimposed structures, pipe lines, equipment and the like.

The blankets are manufactured by providing either a number of lower half-moulds which are assembled in continuous relationship or by providing a multi-form lower half-mould having a plurality of pockets. The lifting ropes 3 and linking ropes 5 are interwoven and laid out on top of the lower half-mould and a corresponding upper half placed in position. The material is then cast into the mould thereby embedding the ropes. If so desired, the ropes can be welded or clamped together at their crossing points at the centre of each segment.

As stated above, the ideal shape for each segment is, in plan view, a regular hexagon. This enables flexibility in any direction and also helps prevent sawing by anchor cables or construction lines since there are no straight line joins through which the sawing can be facilitated.

The blankets have been more specifically described in relation to stabilisation and protection of underwater structures and pipe lines, but other uses, both underwater and on land are intended. For example, the combination of integrated tie ropes at a point where they are protected from damage, and in a manner whereby structural integrity is not impaired by accidental destruction of one or more of the segments or its relative tie ropes, together with the multi-directional ductility of the blanket makes it ideal for paving any unstable surface.

Also the use of 150 mm and 200 mm high segments in alternate horizontal rows on tidal embankments would afford unsurpassed resistance to tidal run-up which, together with its structural integrity, makes the blanket superior to alternative forms of protection for coastal and inland water embankments.

## Claims

1. A flexible blanket for protection or stabilisation of underwater structures and pipe lines, unstable beds and embankments, the blanket comprising a plurality of segments (1) arranged in one or more layers each one segment (1) in height, each segment (1) including a top and a bottom and between the top and bottom a middle zone (2) through which the central plane of the segment (1) passes; and the segments in the or each layer being substantially contiguous at least at their middle zones (2), characterised in that each segment (1) is in plan view, a hexagon; each segment (1) tapers substantially regularly from a maximum hexagonal cross-section at its middle zone (2) to a minimum hexagonal cross-section at one or both ends thereof; each segment (1) is so joined to each adjacent segment (1) in the region of their respective middle zones (2) that the segments are held substantially contiguously but are free to pivot relatively one to another insofar as is permitted by said taper; and in that in plan view each layer resembles a honeycomb where the segments (1) are arranged in a series of parallel rows such that the centres of the segments (1) in one row are off-set from the centres of the segments (1) an adjacent row so that there are no straight line joins between adjacent rows of segments (1).

2. A blanket according to Claim 1, further characterised in that at least some of the segments (1) each taper from the middle zone (2) to one end only, the other end being parallelsided.

3. A blanket according to Claim 1 or Claim 2, further characterised in that at least some of the segments (1) each taper from the middle zone (2) towards each end.

4. A blanket according to any preceding Claim, further characterised in that the segments (1) are joined to one another by rope means (3) extending between adjacent segments (1).

5. A blanket according to Claim 4, further characterised in that the rope means (3) forms an interwoven network extending throughout the blanket and is embedded in the material of each segment.

6. A blanket according to Claim 4 or Claim 5, further characterised in that the rope (3) is of plastics material.

7. A blanket according to any preceding Claim, further characterised in that the material of each segment (1) comprises an aggregate, a filler and a binder.

8. A blanket according to Claim 7, further characterised in that the aggregate is stone, granite, magnetite or haemetite.

9. A blanket according to Claim 7 or Claim 8, further characterised in that the filler and binder are crushed limestone, cement and epoxy resin.

10. A blanket according to any preceding Claim, further characterised in that said taper is at an included angle in the region of 25° to 30°.

11. A blanket according to any preceding Claim, further characterised in that where more than one layer (10) is provided, one of the layers (10) does not extend over the entire area of the blanket (7).

12. A blanket according to any preceding Claim, further characterised in that it is bendable about a 300 millimetre radius in any direction.

## Patentansprüche

1. Flexible Decke zum Schutz oder zur Stabilisation von Unter Wasser-Aufbauten und Pipelines, instabilen Unterlagen und Böschungen, wobei die Decke eine Vielzahl von Segmenten (1) umfaßt, die in einer oder mehreren Schichten angeordnet sind, von denen jede der Höhe eines Segments (1) entspricht, jedes Segment (1) eine Oberseite und eine Unterseite und zwischen der Ober- und Unterseite eine Mittelzone (2) aufweist, durch die die Mittelebene des Segments (1) verläuft, und die Segmente in der oder jeder Schicht wenigstens an ihren Mittelzonen (2) im wesentlichen aneinanderliegen, dadurch gekennzeichnet, daß jedes Segment (1) in der Draufsicht ein Sechseck ist, sich im wesentlichen gleichmäßig von einem maximalen sechseckigen Querschnitt an der Mittelzone (2) zu einem minimalen hexagonalen Querschnitt an einem oder beiden Enden verjüngt, und mit jedem angrenzenden Segment (1) im Bereich dessen Mittelzone (2) so verbunden ist, daß die Segmente im wesentlichen aneinanderliegend gehalten werden, aber frei sind, damit sie sich relativ zueinander verschwenken können, soweit es durch die Verjüngung ermöglicht wird, und daß in der Draufsicht jede Schicht einer Honigwabe gleicht, bei der die Segmente (1) nacheinander in parallelen Reihen so angeordnet sind, daß die Mitten der Segmente (1) in einer Reihe versetzt sind zu den Mitten der Segmente (1) in einer angrenzenden Reihe, so daß keine geraden Verbindungslinien zwischen angrenzenden Reihen von Segmenten (1) vorhanden sind.

2. Decke nach Anspruch 1, dadurch gekennzeichnet, daß wenigstens einige der Segmente (1) sich jeweils von der Mittelzone (2) nur zu einem Ende hin verjüngen, wobei das andere Ende mit parallelen Seiten versehen ist.

3. Decke nach Anspruch 1 oder 2, dadurch gekennzeichnet, daß wenigstens einige der Segmente (1) sich jeweils von der Mittelzone (2) in Richtung auf jedes Ende hin verjüngen.

4. Decke nach den vorhergehenden Ansprüchen, dadurch gekennzeichnet, daß die Segmente (1) durch eine Seileinrichtung (3) miteinander verbunden sind, die sich zwischen angrenzenden Segmenten (1) erstreckt.

5. Decke nach Anspruch 4, dadurch gekennzeichnet, daß die Seileinrichtung (3) ein geflochtenes Netzwerk bildet, das sich durch die Decke erstreckt und in dem Material jedes Segmentes eingebettet ist.

6. Decke nach Anspruch 4 oder 5, dadurch gekennzeichnet, daß das Seil (3) aus Kunststoffmaterial bestaht.

7. Decke nach einem der vorhergehenden Ansprüche, dadurch gekennzeichnet, daß das Material jedes Segments (1) einen Zuschlagstoff, einen Füllstoff und ein Bindemittal umfaßt.

8. Decke nach Anspruch 7, dadurch gekennzeichnet, daß der Zuschlagstoff Stein, Granit, Magnetstein oder Hämatit ist.

9. Decke nach Anspruch 7 oder 8, dadurch gekennzeichnet, daß der Füllstoff und das Bindemittel aus gebrochenem Kalkstein, Zement und Epoxy-Harz bestehen.

10. Decke nach einem der vorhergehenden Ansprüche, dadurch gekennzeichnet, daß die Verjüngung einen eingeschlossenen Winkel in der Größenordnung von 25 bis 30 ° aufweist.

11. Decke nach einem der vorhergehenden Ansprüche, dadurch gekennzeichnet, daß bei der Anordnung von mehr als einer Schicht (10) eine der Schichten (10) sich nicht über die gesamte Fläche der Decke (7) erstreckt.

12. Decke nach einem dar vorhergehenden Ansprüche, dadurch gekennzeichnet, daß sie um einen Radius von 300 mm in jeder Richtung biegbar ist.

## Revendications

1. Enveloppe flexible pour la protection et la stabilisation de structures et de canalisations immergées, de lits et de remblais instables, l'enveloppe comprenant une pluralité de segments (1) disposés suivant une ou plusieurs couches, chacune d'une hauteur égale à un segment (1), chaque segment (1) incluant une partie supérieure et une partie inférieure et une zone médiane (2) située entre la partie supérieure et la partie inférieure et que traverse le plan central du segment (1); et les segments situés dans la ou chaque couche étant sensiblement contigus au moins au niveau de leurs zones médianes (2), caractérisée en ce que chaque segment (1) possède la forme d'un hexagone selon une vue en plan; chaque segment (1) se rétrécit d'une manière sensiblement régulière depuis une sectioin transversale hexagonale maximale au niveau de sa zone médiane (2) jusqu'à une section transversale hexagonale minimale à l'une de ses extrémités ou à ses deux extrémités; chaque segment (1) est réuni à chaque segment adjacent (1) dans la région de leurs zones médianes respectives (2) de telle sorte que les segments sont maintenus sensiblement dans des positions contiguës, mais peuvent pivoter librement l'un par rapport à l'autre dans la mesure où ladite forme rétrécie le permet; et en ce que chaque couche ressemble, selon une vue en plan, à une structure en nid d'abeilles, dans laquelle les segments (1) sont disposés suivant une série de rangées parallèles de telle manière que les centres des segments (1) d'une rangée sont décalés par rapport aux centres des segments (1) situés dans une rangée adjacente, de sorte qu'il n'existe aucune jonction rectiligne entre des rangées adjacentes de segments (1).

2. Enveloppe selon la revendication 1, caractérisée en outre en ce qu'au moins certain des segments (1) se rétrécissent chacun à partir de la zone médiane (2) uniquement en direction d'une extrémité, l'autre extrémité comportant des faces parallèles.

3. Enveloppe selon la revendication 1 ou 2, caractérisée en outre en ce qu'au moins certains des segments (1) se rétrécissent chacun à partir de la zone médiane (2) en direction de chaque extrémité.

4. Enveloppe selon l'une des revendications précédentes, caractérisée en ce que les segments (1) sont réunis l'un à l'autre par des moyens en forme de fil (3) s'étendant entre des segments adjacents (1).

5. Enveloppe selon la revendication 4, caractérisée en outre en ce que les moyens en forme de fils forment un réseau entrelacé s'étendant sur l'ensemble de l'enveloppe et sont insérés dans le matériau de chaque segment.

6. Enveloppe selon la revendication 4 ou 5, caractérisée en ce que le fil (3) est réalisé en une matière plastique.

7. Enveloppe selon l'une quelconque des revendications précédentes, caractérisée en outre en ce que le matériau de chaque segment (1) inclut un agrégat, un matériau de remplissage et un liant.

8. Enveloppe selon la revendication 7, caractérisée en outre en ce que l'agrégat est de la pierre, du granit, de la magnétite ou de l'hématite.

9. Enveloppe selon la revendication 7 ou 8, caractérisée en outre en ce que le matériau de remplissage et le liant sont du calcaire broyé, du ciment et une résine époxy.

10. Enveloppe selon l'une quelconque des revendications précédentes, caractérisée en outre en ce que ladite forme rétrécie fait un angle de dégagement dans la gamme de 45° à 30°.

11. Enveloppe selon l'une quelconque des revendications précédentes, caractérisée en outre en ce que, lorsqu'il est prévu plus d'une couche (10), l'une des couches (10) ne s'étend pas sur l'étendue complète de l'enveloppe (7).

12. Enveloppe selon l'une quelconque des revendications précédentes, caractérisée en outre en ce qu'on peut la cintrer avec un rayon égal à environ 300 millimètres, dans n'importe quelle direction.

FIG. 1

FIG. 2

FIG. 3

2

FIG. 4

FIG. 5

FIG. 6

FIG. 7